Europäisches Patentamt

European Patent Office

Office européen des brevets

(11) Publication number: **0 086 764**
**B1**

# EUROPEAN PATENT SPECIFICATION

(45) Date of publication of patent specification: **31.05.89**   (51) Int. Cl.⁴: **F 41 G 1/30**

(21) Application number: **83850033.8**

(22) Date of filing: **11.02.83**

(54) Sight for a hand fire arm.

(30) Priority: **11.02.82 SE 8200796**

(43) Date of publication of application:
**24.08.83 Bulletin 83/34**

(45) Publication of the grant of the patent:
**31.05.89 Bulletin 89/22**

(84) Designated Contracting States:
**AT BE CH DE FR GB IT LI LU NL SE**

(56) References cited:
**WO-A-80/02069**
**DE-A-1 952 960**
**DE-A-2 413 891**
**FR-A-2 233 589**
**US-A-3 992 782**

(73) Proprietor: **Rüder, Nils Inge Algot**
**The Potteries Wickham Road**
**Farham Hampshire PO16 7HZ (GB)**

(72) Inventor: **Rüder, Nils Inge Algot**
**The Potteries Wickham Road**
**Farham Hampshire PO16 7HZ (GB)**

(74) Representative: **Holmqvist, Lars J.H. et al**
**Lars Holmqvist Patentbyra AB Box 4289**
**S-203 14 Malmö 4 (SE)**

Courier Press, Leamington Spa, England.

## Description

The present invention relates to sights for fire arms, especially handfire arms. The sight can be of the reflection type sight.

The principle for a reflecting sight is previously known and used and means that a semitransparent mirror is placed in the sight line of the eye at aiming. By means of the semitransparent mirror, cross-hairs or a similar reticule are superimposed on the target. The cross-hairs are projected by means of a collimator against the mirror, which is plane. Alternatively, the mirror is concave and the reticule is positioned in the focal plane of the mirror.

At such previously known sights, the means which comprises the mirror are expensive and difficult to manufacture with the necessary precision. A previously known method of manufacturing such a glass body having a concave, semitransparent mirror, is to use a cylindrical glass body having one side plane and the second side convex. At the convex surface, a semitransparent material is applied, e.g. a thin gold layer or aluminum layer. A second cylindrical glass body having a plane surface and a concave surface is positioned with the concave surface against the semitranspsrent convex surface and the two bodies are cemented together. The glass body thus produced must have a certain thickness for a certain smallest diameter, which depends on the geometry of the sight. The thickness is also dependent on how long focal distance which can be allowed.

All together this glass body will be heavy and it is thus unsuitable for use at a sight for a handfire arm. Moreover, the enclosure, which is to maintain the glass body must be manufactured such that it is able to maintain the heavy glass body at the heavy accelerations, which can occur at a handfire arm.

The object of the present invention is to provide a sight which is cheap to manufacture, light and very impact resistant and does not obstruct the sight angle in the lateral direction.

In previously known sights having the heavy glass mirrors, this is impossible since the glass body is too heavy. If the mirror is manufactured from a thin glass disc, which is cut from a glass sphere, i.e. an equally thick, spherical disc, having the concave or the convex surface semitransparent as mentioned above, the glass plate will be very brittle and can hardly be used in handfire arms due to the blows, shocks and accelerations which occur. If the glass plate is too thick, a distortion of the target area is obtained, partially due to the parallax aberration and partially due to a certain lens effect.

According to the present invention the abovementioned object is achieved by the sight defined in claim 1. A sight as defined in the first part of this claim is known from DE-A-2 413 891. The plastic material is not brittle but tenacious and is suitable to resist the accelerations which occur in a handfire arm. The plastic plate is very light, which means that the construction which maintains and supports the imaging element can be made less complex and less bulky. Since the element is thin, the distortion and the parallax aberration are minimal.

The plastic material used in the embodiments is acrylic plastic and the mirror formed therefrom has a thickness of about 0,8 mm, a diameter of about 25 mm and a focal distance, i.e. a spherical radius of about 50 mm.

Since the mirror is very light, it is possible to use a light supporting device and a light enclosure made of molded plastics. Moreover, the housing which encloses the sight can have a small material thickness and be manufactured such that a maximum sight angle is achieved. In this regard it is essential that the enclosure does not obscure the sight in an unnecessary degree in the lateral direction. In the downward direction, the fire arm will obscure the sight in any case and in the upward direction the need of free sight angle is not so great, since most movable targets move in the lateral direction. The side surfaces of the enclosure can be shaped as a truncated cone, while the positioning means for the sight and the illumination device for the cross-hairs are positioned above and below said cone.

Finally, the sight must be positioned such that the cross-hairs can be positioned to be superimposed on the target at the actual mounting on the fire arm. This positioning means can be provided so that the direction of the enclosure in relation to the fire arm is adjusted, a so-called outer positioning means. However, in the described embodiments there is used an internal positioning means, by means of which the orientation of the mirror inside the enclosure is adjusted. In this way a more safe mounting of the enclosure on the fire arm can be achieved. The positioning means used with the invention has long lever arms, whereby an accurate adjustment can be achieved.

The reticule in the sight according to the present invention comprises a plate having cross-hairs or similar etched therein, whereby the cross-hairs are positioned in the focal plane of the mirror. For illuminating the cross-hairs there is preferably used a plastic rod comprising fluorescent material. When the fluorescent material is illuminated by the daylight, a proportionally great portion of the fluorescent light is emitted through the edge surfaces of the rod, which thus is arranged for illuminating the cross-hairs. This technique is previously known per se. Alternatively conventional light sources can be used as a light emitting diode, a filament lamp, a radioactive luminescent material or combinations thereof. In an embodiment of the present invention, both the reticule, i.e. the cross-hairs or similar, and the illumination device are exchangable.

A particular embodiment of the invention also contemplates a new type of light source incorporating multiple reticule patterns. The light source is made of a tubular or annular body or sleeve of a transparent material which incorporates a fluorescent material or dye. One end surface is masked off, e.g. photographically with paint, print etc. Several different reticule patterns are applied and are spaced by an equal angle α distance. The sleeve is positioned in an annular recess in the enclosure and is rotatable around the horizontal axis of the sight. A snap locking device is arranged to permit the sleeve to be rotated in steps corresponding to said angle α in order to position one of said reticules in correct position to be used as a reticule and be reflected by the mirror to the observer's eye.

The fluorescent dye in the sleeve will be excited by the scattered daylight and emits a red light through the end or edge surface as described above for the illuminating rod, and illuminates the reticule to be used.

According to an embodiment of the invention it is also possible to use a holographic diffraction element as the optical imaging element, which is a newly developed optical element or film having the property to diffract light of a certain wavelength but does not affect light of other wavelengths. Thus, more than 90% of the daylight from the aiming area can pass this optical element, while more than 90% of the red light from the reticule is reflected or diffracted by said element. The holographic element essentially consists of a photographically active material or gelatine positioned on a plastic substrate or film. The element can be enclosed or sandwiched between two discs of glass or plastics in order to enhance the rigidity. The element can be given the properties necessary for the purpose of this invention as is more clearly disclosed below.

In order to explain the invention, several embodiments of the invention are described below by reference to the appended drawings. However, the invention is not limited to the embodiments described, which are only shown for purpose of illustration. In the drawings:

Fig. 1 is a cross-sectional view through a sight according to the present invention.

Fig. 2 is an end view of the sight according to Fig. 1 taken along the line II-II in Fig. 1.

Fig. 3, 4 and 5 are perspective views of details comprised in the sight according to Fig. 1.

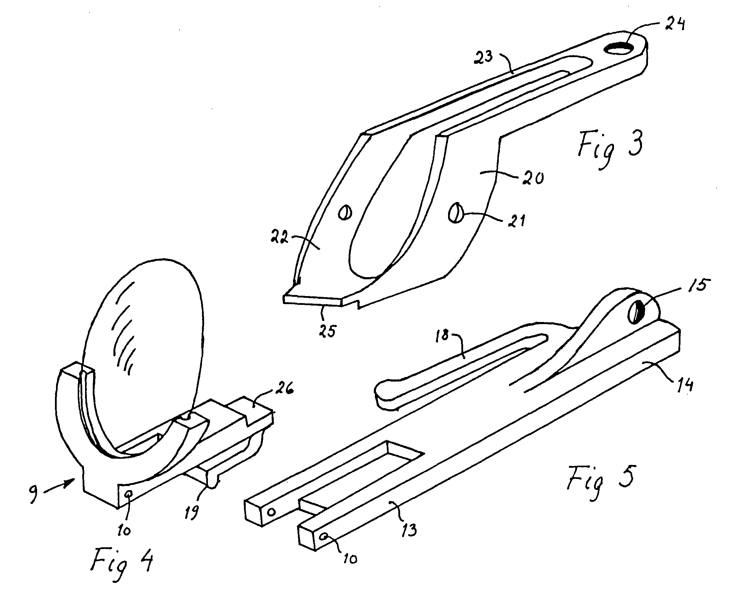

Thus, Fig. 3 is a perspective view of the vertical positioning device.

Fig. 4 is a perspective view of the mirror cradle.

Fig. 5 is a perspective view of the horizontal positioning device.

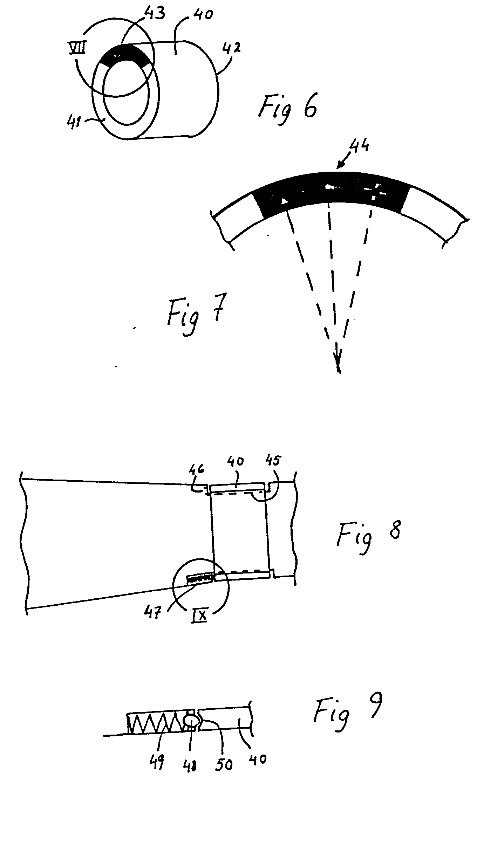

Fig. 6 is a perspective view of the reticule sleeve,

Fig. 7 is an enlarged plan view of the encircled area VII of Fig. 6.

Fig. 8 is a side view and shows the reticule sleeve mounted to the sight enclosure.

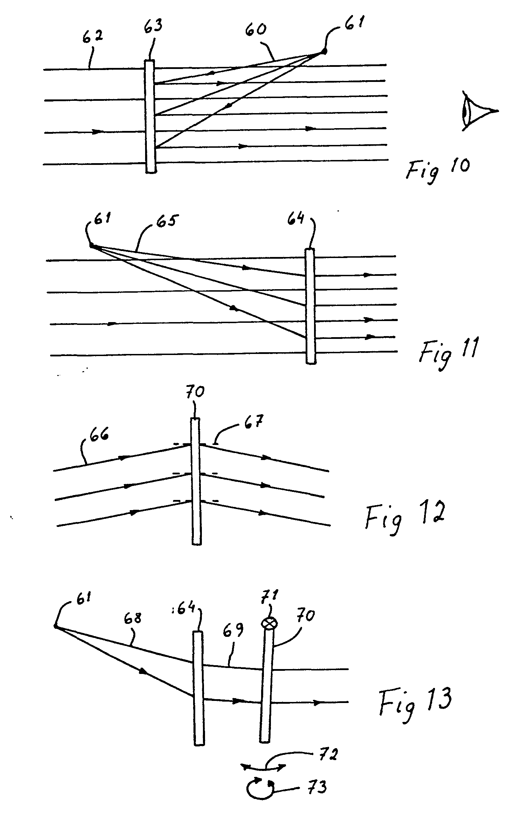

Fig. 9 is an enlarged sectional view of the encircled area IX in Fig. 8.

Fig. 10 is a schematic view of a holographic optical element.

Fig. 11 is a view similar to Fig. 10 of a second holographic optical element.

Fig. 12 is a view similar to Fig. 11 of a third holographic optical element according to an embodiment of the invention.

Fig. 13 is a view similar to Fig. 10 and shows a combination of the holographic optical elements of Figs. 11 and 12.

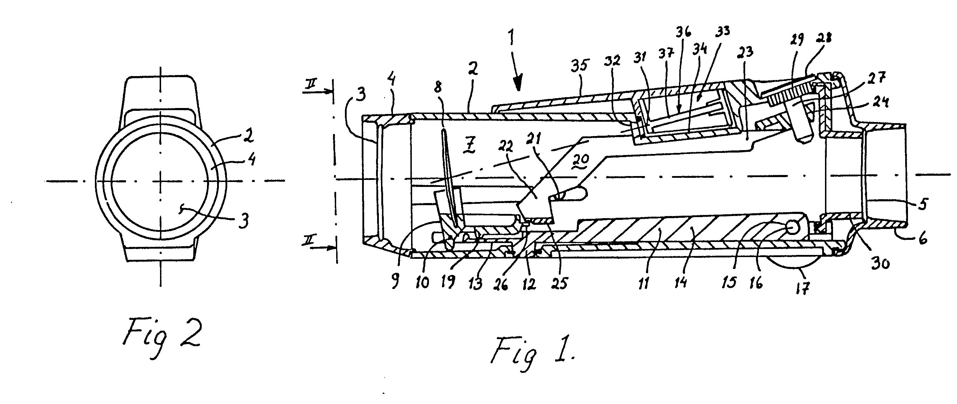

Referring to Fig. 1 there is shown a sight 1 according to the present invention. The sight comprises a sight tube 2, which has a truncated conical shspe. The tube is closed by a front transparent plastic disc 3 supported by a front sleeve 4 and a back transparent plastic disc 5 supported by a back sleeve 6 in order to protect the interior of the tube. The front and the back sleeves are attached to the tube by snap action, whereby a closed, dustless, essentially cylindrical or cone-shaped inner space 7 is defined. Inside this space, there is a concave, semitransparent mirror 8. The mirror is made of a thin, transparent essentially spherical plastic disc having a thin gold layer or aluminum layer or similar applied preferably on the concave side of the mirror. The disc has a constant material thickness and is supported by a mirror cradle 9. The mirror cradle has a groove for supporting the mirror. The mirror is attached to the mirror cradle by means of an adhesive or cement, which does not provide any distortion of the shape of the mirror.

The mirror cradle 9 is pivotable around a horizontal supporting axis 10, which is attached to a first positioning arm 11 for horizontal positioning, which arm 11 is journalled in the tube 2 around a vertical axis 12. The positioning arm comprises two portions 13 and 14 positioned on each side of the axis 12. The front portion 13 supports the mirror cradle 9 and the back portion 14 comprises a threaded hole 15 having a horizontal axis. The hole 15 is placed at a greater distance from the vertical axis 12 than the supporting point 10 of the mirror cradle. A threaded screw 16 cooperates with the threaded hole 15 in the back portion of the positioning arm, and the screw 16 is rotatably but axially non-movably arranged in the tube 2. The screw 16 has a comparatively big head 17 and has an essentially horizontal axis. The positioning arm comprises a spring 18, which is integrally formed with the arm, preferably on its back portion 14. The spring 18 biases the positioning arm around its vertical axis 12 such that the head 17 of the screw is brought to abut the tube 2. The positioning arm 11 is placed in the lower portion of the enclosure and does not obscure the sight area.

By means of said first positioning arm 11, the angle position of the mirror in the horizontal direction can be adjusted by the screw 16 being threaded in the hole 15. The angle position of the mirror in the vertical direction is adjusted by rotating the mirror cradle around its own supporting axis 10 by means of a second positioning arm 20. The cradle 9 comprises a spring 19 integrally formed with the cradle, the spring biasing the mirror cradle anticlockwise around the supporting point 10 as seen in Fig. 1. The spring abuts a shoulder of the front portion 13 of the first positioning arm.

The second positioning arm 20 is journalled around a horizontal supporting point 21 and comprises a front 22 and a back 23 portion positioned on each side of the supporting point 21. The positioning arm is cut from an essentially tube-shaped body and has a shape which appears from Fig. 3. Thus, the positioning arm 20 will always be placed immediately close to the side walls of the tube 2 and thus minimally disturb or obscure the sight area. In the back portion 23 of the positioning arm there is an essentially vertical, threaded hole 24, and on the front portion 22 there is a contact surface 25, which cooperates with a corresponding contact surface 26 shaped on the back portion of the mirror cradle. A threaded screw 27 having a comparatively big head 28 cooperates with the threaded hole 24 in the back portion 23 of the positioning arm, and the head abuts the tube 2. The screw 27 with the head 28 is rotatably but axially non-movably arranged in relation to the enclosure. The spring 19 of the mirror cradle 9 entails that the positioning arm 20 is biased anticlockwise as seen in Fig. 1 by means of the contact surfaces 25 and 26, whereby the head 28 of the screw is biased against the tube 2.

A rotation of the screw 16 of the horizontal positioning arm 11 and the screw 27 of the vertical positioning arm 20 entails that the arms are pivoted around their supporting points 12 and 21, respectively, whereby the mirror is adjusted. Due to the fact that said positioning points are arranged relatively close to the mirror, there is achieved a great gearing and one revolution of the positioning screws corresponds to a comparatively small angle adjustment of the mirror. In this way an accurate positioning can be achieved.

The lever arms and the pitch of the threads of both positioning devices are so arranged that one revolution of each positioning screw corresponds to the same angle change in horizontal and vertical direction.

The head 28 of the screw 27 is provided with a portion which comprises teeth 29 or similar having a certain pitch. An elastic snap device 30 cooperates with the teeth and provides a stepped resistance against the rotation of the screw. Each tooth corresponds to a certain small angle adjustment of the mirror and the mirror can be adjusted by counting the number of teeth which are passed at the positioning, which gives a measure of the angle change. The same is true for the screw 16 of the horizontal positioning arm 11.

The snap device 30 is adapted for both heads of the two screws and is made in one piece. Thus, there is needed only one element for performing two functions, and the number of parts of the sight according to the invention is decreased by one. Simultaneously, the snap device 30 is a support for the back plastic disc 5 as appears from Fig. 1.

A reticule 31 is positioned in the focal plane of the mirror 8. A hole 32 is made in the upper portion of the enclosure. The reticule is composed of a metal plate having cross-hairs etched therein, or a photographic film including a photographically provided cross-hairs. Other reticules can also be used such as a standing triangle, a circle, a graduated scale and similar. The mirror has comparatively short focal distance, which means that the sight can be made small and compact and that the mirror enlarges the cross-hairs with a big ratio, whereby cross-hairs with smaller dimensions can be used. The cross-hairs 31 is positioned in an insert 33, which is replacably adapted on the upper side of the sight in a recess 34. The insert is locked in place by a locking plate 35.

The insert also comprises an illumination device for the cross-hairs. In the embodiment shown the illumination device 36 comprises a plastic rod 37, in which is enclosed a fluorescent material or dye, which after illumination emits red light. The plastic material is essentially transparent. The plastic rod has parallel side surface and two edge surfaces. Below and beside the plastic rod there is a reflecting material. When daylight penetrates the plastic rod, the fluorescent material is excited inside the plastic rod and emits light within a certain wavelength range, which depends on the material used. The more incident daylight, the more fluorescent light is emitted. However, all light emitted from each particle in the plastic material and which hits the parallel side surfaces of the material under a greater angle than the total reflection angle, will be enclosed inside the plastic rod and totally reflected against said side surface until the light reaches an edge surface, where the light can leave the plastic rod. In this way, a proportionally big portion of the fluorescent light is emitted through the plastic rod edge surface. One end surface of the plastic rod can be placed immediately above the cross-hairs, whereby a very efficient illumination of the cross-hairs is achieved. This principle is previously known per se.

Of course the illumination can be made in other ways, e.g. by a light emitting diode or a filament bulb and a battery. Night illumination can be achieved by a radioactive fluorescent material in said plastic rod or in other per se previously known manners.

In Fig. 6 a second embodiment of the reticule is shown. The reticule is placed on a plastic sleeve 40 having an annular or cylindrical shape. As mentioned previously, the plastic material of the sleeve is essentially transparent and includes a fluorescent dye which upon excitation of scattered daylight emits red light, which to a great portion leaves the sleeve through its edge surfaces 41 and 42. One portion 43 of the first edge surface 41 is masked off by any suitable method and reticule patterns 44 are created in the masked area as is evident from Fig. 7. In Fig. 7, there is shown three reticule patterns but it is realized that this embodiment is not limited to the number and nature of reticule patterns shown. The reticule patterns are spaced by a certain angle α as shown in Fig 7.

The sleeve is mounted on the enclosure in a correspondingly shaped recess 45 so that only one of the reticule patterns is placed opposite to a hole 46 in the enclosure. The angular position of the sleeve can be altered by rotating the sleeve and a snap device 47 shown in more details in Fig. 9 allows the intended reticule pattern to be placed opposite said hole 46. The snap device 47 comprises a spring-loaded 49 ball 48 which engages recesses 50 in the sleeve 40.

Finally, the semitransparent mirror can be replaced by a holographic optical element. A holographic optical element consists of a photographic film having a photographically active gelatine layer positioned on a substrate or plastic film. In order to rigidify the element, it is placed between two rigid plastic discs. Thus, the element is thin and has parallel surfaces. The holographic optical element manipulates or diffracts light of a certain specific wavelength but does not influence light of a different wavelength which passes straight through the optical element. The light of said specific wavelength is manipulated in different ways and all commonly known optical elements, such as lenses, prisms, etc., as well as new elements can be obtained. For the purpose of this invention it is possible to construct a holographic optical element with the property to reflect incident red light as a concave mirror. Simultaneously, all other wavelengths are unaffected which means that more than 90% of the aiming area light is transmitted. Thus, the holographic optical element can reflect 90% of the red light while transmitting 90% of all other light.

Fig. 10 shows such a holographic optical element 63 which reflects the red light beams 60 from the reticule 61 as a concave mirror but transmits light beams 62 from the aiming area. The holographic optical element is very thin and is perpendicular to the beams 62. The holographic optical element can be arranged as a lens 64 which acts upon the red beams 65 from the red reticule. There is another holographic optical element 70 which acts as a variable prism and essentially mirrors the red beams 66 in a mirror surface 67 perpendicular to the holographic optical element 70. Such a holographic optical element can be made to act in one direction or in two directions. Such a holographic optical element is suitable for adjusting the red beams as illustrated in Fig. 13. The holographic optical element 64 of Fig. 11 has been misaligned and the parallel beams 69 have to be redirected with the holographic optical element 70 according to Fig. 12. The holographic optical element 70 can be adjustable around an axis 71 as shown by arrows 72 in Fig. 13. In order to redirect the beams 71 in the perpendicular direction, the same holographic optical element 70 can be adjusted as indicated by arrows 73. Alternatively a second holographic optical element 70 can be used.

Thus, according to the invention, the holographic optical element can replace the mirror in order to make the sight more efficient. Also the holographic optical element 64 can replace the mirror but it can now hardly be called a reflecting sight. For convenience this feature is intended to be incorporated in the present invention for a reflecting sight, since the principle and assembly of the sight is the same as for a reflecting sight, although the reticule now can be placed at the forward end of the sight.

Of course the different elements of Figs. 10 to 13 can be combined in order to achieve the necessary adjustment possibilities as intended.

## Claims

1. A sight for a hand fire arm comprising
— a tubular housing (2) having a first window (3, 4) through which light from a sighted target is received and a second window (5, 6) in the path of the light received through the first window,
— semitransparent imaging means arranged inside the housing on the path of the light from the first to the second window, said imaging means comprising one or several optical imaging elements (8) made of plastics material,
— a reticule (31) positioned in the focal plane of the imaging means,
— an illumination device (36) for the reticule,
— first positioning means (11) for adjusting the angular position of the imaging means with respect to a first axis (12) extending transversely to said light path, said first positioning means being arranged inside the housing and cooperating with a first actuating element (16) operable from outside the housing,
— second positioning means (20) for adjusting the angular position of the imaging means with respect to a second axis (10) extending transversely to said light path and to said first axis, said second positioning means being also arranged inside the housing and cooperating with a second actuating element (27) operable from outside the housing,
characterized in that
— the first positioning means comprises a first lever arm (11) pivotably supported within the housing (2) about said first axis and biased against the first actuating element (16) by means of a first spring (18),
— the second positioning means comprises a second lever arm (20) pivotably mounted within the housing about a further axis (21) parallel to said second axis,
— the imaging means (8) is supported by a cradle (9) pivotably mounted to one end (13) of said first lever arm (11) about said second axis (10) and having a second spring (19) urging the cradle in contact with one end (22) of said second lever arm (20).

2. The sight of claim 1 wherein each actuating element consists of a screw (16; 27) protruding through the wall of the housing and cooperating with a threaded hole (15; 24) in the other end (14; 23) of the respective lever arm (11; 20) opposite to said one end (13; 23).

3. The sight of claim 2 wherein said housing (2) and the positioning means (11, 20) are made of molded plastics material.

4. The sight according to claim 2 or 3 wherein the head (17, 28) of each screw (16, 27) is provided with teeth (29) at its peripheral portion, the teeth of each head engaging a snap device (30) enabling stepwise rotation of the screws.

5. The sight according to any of the preceding claims wherein the reticule (31) is in the form e.g. of cross hairs, a triangle or a graduated scale and wherein the outer surface of the housing (2) is provided with a recess (34) covered by a removable locking plate (35) retaining within said recess an exchangeable insert unit (33) comprising the reticule (31) and the illumination device (36), the reticule facing an aperture (32) in the wall of the housing.

6. The sight of claim 5 wherein the illumination device (36) comprises a rod (37) of transparent plastics material incorporating a fluorescent substance, the reticule (31) being arranged opposite one end face of the rod to receive the fluorescent light emerging from this face.

7. The sight according to any of claims 1 to 4 wherein several different reticule patterns (44) are provided at an annular end face of a transparent sleeve (40) containing a fluorescent material and being mounted coaxially with respect to said housing (2) in a coaxial recess (45) formed in the exterior surface of the housing and wherein the recess comprises a hole (46) through the wall of the housing with which hole one of the reticule patterns can be aligned by rotation of the sleeve.

8. The sight according to any of the preceding claims wherein the imaging means comprises a mirror (8) consisting of a laminar transparent spherical substrate of plastics material covered with a semitransparent layer made e.g. of gold or aluminum.

9. The sight according to any of claims 1 to 7 wherein the imaging means comprises a holographic element (63, 64) arranged to diffract light of a predetermined wavelength and to pass all other wavelengths undiffracted, said holographic element being arranged to act as a concave mirror or as a lens.

10. The sight according to claim 9 wherein the imaging means comprises a further holographic element (70) acting as a prism whose position is fixed or variable with respect to at least one pivot axis (71).

**Patentansprüche**

1. Visier für Handfeuerwaffe mit
— einem rohrförmigen Gehäuse (2) mit einem ersten Fenster (3, 4) zum Lichtempfang von einem anvisierten Ziel, und einem zweiten Fenster (5, 6) im Lichtpfad durch das erste Fenster,
— halbtransparenten Bildmittel im Gehäuse am Lichtpfad vom ersten zum zweiten Fenster, welche Mittel ein oder mehrere optische Bildelemente (8) aus Kunststoff einschliessen,
— einem Fadenkreuz (31) in der Brennpunktebene der Bildmittel,
— einem Beleuchtungsgerät (36) für das Fadenkreuz,

— ersten Positionierungsmitteln (11) zur Einstellung der Winkelstellung der Bildmittel bezüglich einer ersten Axe (12), die sich quer zum Lichtpfad erstreckt, wobei die ersten Positionierungsmittel innerhalb eines Gehäuses angeordnet sind und mit einem ersten Betätigungsmittel (16) zusammenwirken das von der Aussenseite des Gehäuses aus betätigbar ist, und
— zweiten Positionierungsmitteln (20) zur Einstellung der Winkelstellung der Bildmittel bezüglich einer zweiten Axe (10), die sich quer zum Lichtpfad und zur ersten Axe erstreckt, wobei die zweiten Positionierungsmittel ebenfalls innerhalb des Gehäuses angeordnet sind und mit einem zweiten Betätigungselement (27) zusammenwirken, die von der Aussenseite des Gehäuses betätigbar sind, dadurch gekennzeichnet, dass
— die ersten Positionierungsmittel einen ersten Hebelarm (11) einschliessen, der im Gehäuse (2) um die erste Axe schwenkbar und gegen das erste Betätigungselement (16) mittels einer ersten Feder (18) vorgespannt ist,
— die zweiten Positionierungsmittel einen zweiten Hebelarm (20) einschliessen, der im Gehäuse um eine weitere Axe (21) montiert, ist, die zur zweiten Axe parallel verläuft,
— die Bildelemente (8) mittels einer Gabel (9) schwenkbar an einem Ende (13) des ersten Hebelarmes (11) um die zweite Axe (10) montiert sind und eine zweite Feder (19) aufweisen, welche die Gabel mit einem Ende (22) des zweiten Hebelarmes (20) in Berührung bringt.

2. Visier nach Anspruch 1, dadurch gekennzeichnet, dass das Betätigungselement aus einer Schraube (16, 27) besteht, die sich durch die Gehäusewandung erstreckt und mit einem Gewindeloch (15, 24) am anderen Ende (14, 23) des jeweiligen Hebelarmes (11, 20), gegenüber dem einen Ende (13, 20), zusammenwirkt.

3. Visier nach Anspruch 2, dadurch gekennzeichnet, dass das Gehäuse (2) und die Positionierungsmittel (11, 20) aus gegossenem Kunststoff bestehen.

4. Visier nach Anspruch 2 oder 3, dadurch gekennzeichnet, dass der Kopf (17, 28) von jeder Schraube (16, 27) am Umfang mit Zähnen (29) versehen ist, die jeweils in ein Schnappgerät (30) eingreifen, das eine stufenweise Rotation der Schrauben ermöglicht.

5. Visier nach einem der vorangehenden Ansprüche, dadurch gekennzeichnet, dass das Fadenkreuz (31) beispielsweise als Haarkreuz, Dreieck oder Gradskala ausgebildet ist, wobei die äussere Fläche des Gehäuses (2) mit einer Vertiefung (34) versehen ist, die von einer Sperrplatte (35) zugedeckt ist, die innerhalb der Vertiefung eine austauschbare Einsatzeinheit (36) festhält, die das Fadenkreuz (31) und das Beleuchtungsgerät (36) einschliesst, wobei das Fadenkreuz (31) auf eine Öffnung (32) in der Gehäusewandung gerichtet ist.

6. Visier nach Anspruch 5, dadurch gekennzeichnet, dass das Beleuchtungsgerät (36) aus einem Stab (37) aus transparentem Kunststoff besteht, der eine fluorisierende Substanz enthält, wobei das Fadenkreuz (31) gegenüber einer Endfläche des Stabes, zum Empfang des fluorisierenden Lichtes, angeordnet ist, das von dieser Fläche ausstrahlt.

7. Visier nach einem der Ansprüche 1 bis 4, dadurch gekennzeichnet, dass mehrere unterschiedliche Fadenkreuzmuster (44) an einer ringförmigen Endfläche einer transparenten Hülse (40) angeordnet sind, die ein fluorisierendes Material enthält und koaxial zum Gehäuses (2) in einer koaxialen Vertiefung (45) montiert ist, die in einer Aussenfläche des Gehäuses ausgeformt ist, und in welcher die Vertiefung ein Loch (46) durch die Wand des Gehäuses einschliesst, in welchem Loch eines der Fadenkreuzmuster durch Rotation der Hülse ausrichtbar ist.

8. Visier nach einem der vorangehenden Ansprüche, dadurch gekennzeichnet, dass die Bildmittel einen Spiegel (8), bestehend aus laminar transparentem, kugelförmigem Substrat aus Kunststoff aufweist, der mit einer halbtransparenten Schicht zugedeckt ist, die beispielsweise aus Gold oder Aluminium hergestellt ist.

9. Visier nach einem der Ansprüche 1 bis 7, dadurch gekennzeichnet, dass das Bildmittel ein holografisches Element (63, 64) einschliesst, das zum Ablenken von Licht einer vorbestimmten Wellenlänge und zum Durchlassen von nicht abgelenktem Licht aller anderen Wellenlängen angeordnet ist, wobei das holografische Element als konkaver Spiegel oder Linse dient.

10. Visier nach Anspruch 9, dadurch gekennzeichnet, dass das Bildgerät ein weiteres, holografisches Element (70) aufweist, das als Prisma dient, dessen Position bezüglich mindestens einer Schwenkaxe (71) fest oder variabel ist.

**Revendications**

1. Appareil de visée pour arme à feu portative comprenant:
— un carter (2) tubulaire ayant une première fenêtre (3, 4) à travers laquelle est reçue la lumière émise par une cible éclairée et une seconde fenêtre (5, 6) située sur le trajet de la lumière reçue à travers la première fenêtre,
— des moyens semi-transparents fournissant une image disposés à l'intérieur du carter sur le trajet de la lumière entre la première à la seconde fenêtre, les moyens fournissant une image comprenant un ou plusieurs éléments optiques fournissant une image (8) réalisés en matière plastique,
— un réticule (31) situé dans le plan focal des moyens fournissant une image,
— un dispositif d'éclairage (36) du réticule,
— des premiers moyens de positionnement (11) destinés à ajuster la position angulaire des moyens fournissant une image par rapport à un premier axe (12) s'étendant transversalement par rapport au trajet de la lumière, les premiers moyens de positionnement étant disposés à l'intérieur du carter et coopérant avec un premier élément d'actionnement (16) pouvant être manoeuvré de l'extérieur du carter,

— des seconds moyens de positionnement (20) destinés à ajuster la position angulaire des moyens fournissant une image par rapport à un second axe (10) s'étendant transversalement au trajet de la lumière et au premier axe, les seconds moyens de positionnement étant également disposés à l'intérieur du carter et coopérant avec un second élément d'actionnement (27) pouvant être manoeuvré de l'extérieur du carter, caractérisé en ce que:
— les premiers moyens de positionnement comportent un premier bras de levier (11) monté pivotant dans le carter (2) autour dudit premier axe et appuyé contre le premier élément d'actionnement (16) à l'aide d'un premier ressort (18),
— les seconds moyens de positionnement comportent un second bras de levier (20) monté pivotant dans le carter autour d'un autre axe (21) parallèle audit second axe,
— les moyens fournissant une image (8) sont supportés par un berceau (9) monté pivotant à une première extrémité (13) du premier bras de levier (11) autour dudit second axe (10) et comportant un second ressort (19) poussant le berceau en contact avec une première extrémité (22) du second bras de levier (20).

2. Appareil de visée selon la revendication 1, dans lequel chaque élément d'actionnement consiste en une vis (16; 27) faisant saillie à travers la paroi du carter et coopérant avec un alésage fileté (15; 24) de l'autre extrémité (14; 23) du bras de levier respectif (11; 20) opposée à ladite première extrémité (13; 23).

3. Appareil de visée selon la revendication 2, dans lequel le carter (2) et les moyens de positionnement (11; 20) sont réalisés en matière plastique moulée.

4. Appareil de visée selon la revendication 2 ou 3, dans lequel la tête (17, 28) de chaque vis (16, 27) est pourvue de dents (29) à sa partie périphérique, les dents de chaque tête étant en contact avec un dispositif d'encliquetage (30) permettant une rotation pas à pas des vis.

5. Appareil de visée selon l'une quelconque des revendications précédentes, dans lequel le réticule (31) est réalisé sous forme, par exemple, d'une croisée de fils, un triangle ou une échelle graduée et dans lequel la surface extérieure du carter (2) est munie d'une cavité (34) couverte par une plaque de fermeture (35) amovible retenant dans ladite cavité un ensemble formant insert (33) pouvant être changé comprenant le réticule (31) et le dispositif d'illumination (36), le réticule regardant vers une ouverture (32) de la paroi du carter.

6. Appareil, de visée selon la revendication 5, dans lequel le dispositif d'illumination (36) comporte une tige (37) de matière plastique transparente comportant une substance fluorescente, le réticule (31) étant disposé en vis-à-vis d'une première face d'extrémité de la tige pour recevoir la lumière fluorescente sortant de cette face.

7. Appareil de visée selon l'une quelconque des revendications 1 à 4, dans lequel plusieurs dessins (44) de réticules différents sont prévus sur une face d'extrémité annulaire d'un manchon (40) transparent contenant une matière fluorescente et étant monté coaxialement par rapport au boîtier (2) dans une cavité coaxiale (45) formée à la surface extérieure du carter et dans lequel la cavité comporte un alésage (46) à travers la paroi du carter avec lequel l'un des dessins de réticule peut être aligné par rotation du manchon.

8. Appareil de visée selon l'une quelconque des revendications précédentes, dans lequel les moyens fournissant une image comportent un miroir (8) consistant en une couche lamellaire transparente sphérique de matière plastique couverte d'une couche semi-transparente réalisée par exemple en or ou aluminium.

9. Appareil de visée selon l'une quelconque des revendications 1 à 7, dans lequel les moyens fournissant une image comportent un élément holographique (63, 64) disposé pour diffracter la lumière d'une longueur d'onde prédéterminée et pour laisser passer toutes les autres longueurs d'ondes non diffractées, l'élément holographique étant disposé pour agir comme un miroir concave ou comme une lentille.

10. Appareil de visée selon la revendication 9, dans lequel les moyens fournissant une image comportent un autre élément holographique (70) agissant comme un prisme dont la position est fixée ou variable par rapport à au moins un axe de pivotement (71).

Fig 1.

Fig 2

Fig 3

Fig 4

Fig 5

EP 0 086 764 B1

Fig 6

Fig 7

Fig 8

Fig 9

Fig 10

Fig 11

Fig 12

Fig 13

4